(19) Europäisches Patentamt
European Patent Office
Office européen des brevets

(11) **EP 1 852 626 A1**

(12) **EUROPEAN PATENT APPLICATION**
published in accordance with Art. 158(3) EPC

(43) Date of publication:
**07.11.2007 Bulletin 2007/45**

(51) Int Cl.:
*F16D 31/02* *(2006.01)*  *F16D 33/00* *(2006.01)*
*F16D 39/00* *(2006.01)*

(21) Application number: **06714071.5**

(22) Date of filing: **20.02.2006**

(86) International application number:
**PCT/JP2006/302930**

(87) International publication number:
**WO 2006/088175 (24.08.2006 Gazette 2006/34)**

(84) Designated Contracting States:
**DE FR GB IT**

(30) Priority: **21.02.2005 JP 2005044546**

(71) Applicant: **Toyota Jidosha Kabushiki Kaisha Toyota-shi, Aichi 471-8571 (JP)**

(72) Inventors:
• **SHIOIRI, Hiroyuki**
  **, Toyota-shi, Aichi, 4718571 (JP)**

• **HOJO, Yasuo**
  **, Toyota-shi, Aichi, 4718571 (JP)**
• **IBARAKI, Ryuji**
  **, Toyota-shi, Aichi, 4718571 (JP)**
• **NOMASA, Hitoshi**
  **, Toyota-shi, Aichi, 4718571 (JP)**

(74) Representative: **Harris, Ian Richard**
  **D Young & Co**
  **120 Holborn**
  **London EC1N 2DY (GB)**

(54) **POWER TRANSMISSION DEVICE**

(57) A power transmission system having a positive displacement pump which is driven by a prime mover, and an output member which is driven by a fluid discharged from the positive displacement pump, characterized by comprising a rotational direction switching mechanism for switching a rotational direction of the output member between forward direction and backward direction. The rotational direction switching mechanism comprises a mechanism for switching a direction of a torque applied to the output member through the fluid between forward direction and backward direction.

FIG.1

EP 1 852 626 A1

**Description**

TECHNICAL FIELD

This invention relates to a power transmission system, in which an output member can be rotated by a fluid discharged from a positive displacement pump.

BACKGROUND ART

In general, a vehicle is provided with a prime mover and a power transmission system is arranged on an output side of the prime mover. This power transmission system comprises a clutch, a transmission and so on. An engaging type power transmission system, a frictional type power transmission system, a fluid type power transmission system, an electromagnetic type power transmission system etc. are known in the art, and one example of the fluid type power transmission system is disclosed in Japanese Patent Laid-Open No. 8-109955. According to the high hydraulic jet transmission taught by Japanese Patent Laid-Open No. 8-109955, a positive displacement high pressure hydraulic pump is driven by a prime mover, and the oil discharged from the hydraulic pump is introduced selectively into two nozzles through a selector valve. Also, two hydraulic jet pelton wheels having different diameters are provided on an output shaft for each nozzle.

The hydraulic jet pelton wheel is operated by selectively using the nozzles to receive the oil jet of one of the nozzles. According to the teaching of Japanese Patent Laid-Open No. 8-109955, speed change is enabled by selectively using the hydraulic jet pelton wheels jetting the oil. An another example of the power transmission system arranged between a prime mover and a transmission is disclosed by Japanese Patent Laid-Open No. 8-284977. The power transmission system disclosed in Japanese Patent Laid-Open No. 8-284977 is provided with a cam member which is rotated by a power of the prime mover, a cylinder member which is connected with an output shaft, and a ball member which is fitted into the cylinder member and which is adopted to roll on a cam surface of the cam member. In this power transmission system, torque is transmitted according to the pressure between the ball and the cam surface.

However, according to the power transmission system disclosed in Japanese Patent Laid-Open No. 8-109955, a rotational direction of the output shaft cannot be changed.

DISCLOSURE OF THE INVENTION

The present invention has been conceived noting the technical problems thus far described, and its object is to provide a power transmission system in which an output member is rotated by a fluid discharged from a pump, and which is capable of changing a rotational direction of the output shaft.

In order to achieve the above-mentioned objects, according to the invention, there is provided a power transmission system having a positive displacement pump which is driven by a prime mover, and an output member which is rotated by a fluid discharged from the positive displacement pump, comprising a rotational direction switching mechanism for switching a rotational direction of the output member between forward direction and backward direction.

The rotational direction switching mechanism of the invention comprises a mechanism for switching a route of controlling a fluid suction condition or a fluid discharging condition of the positive displacement pump, between a first flow route which is to be selected in case of rotating the output member in the forward direction, and a second flow route which is to be selected in case of rotating the output member in the backward direction.

Also, the rotational direction switching mechanism comprises a mechanism for driving the output member by jetting the fluid to the output member.

In addition to above, the rotational direction switching mechanism comprises a mechanism for suppressing an increase in a kinetic energy to rotate the output member backwardly, by reducing a feeding amount of the fluid fed to the output member from the positive displacement pump in the direction to rotate the output member backwardly, in case the route of rotating the output member in the forward direction is selected.

The positive displacement pump of the invention comprises an input member to which power of the prime mover is transmitted, and a connection member capable of enabling and disabling a power transmission to the output member selectively, and a mechanism allowing the output member to rotate in the forward direction in case the connection member is connected with the output member in a power transmittable manner. The connection member and the input member are connected with each other in a power transmittable manner.

The rotational direction switching mechanism further comprises a mechanism interrupting a transmission of a power to rotate the output member in the forward direction from the input member, by disabling the connection member to transmit the power to the output member, in case the flow route of rotating the output member in the backward direction by the fluid discharged from the positive displacement pump is selected.

Preferably, in addition to above, the positive displacement pump comprises an input member to which power of the prime mover is transmitted, and a connection member capable of enabling and disabling a power transmission to the output member selectively, and also, the rotational direction switching mechanism further comprises a mechanism allowing the fluid discharged from the positive displacement pump to be jetted onto the output member, while interrupting a transmission of a power to rotate the output member in the forward direction from the input member driven by the prime mover, by preventing the connection member to transmit the power to the output member, in case the flow route of rotating the output member in the backward direction by the fluid discharged from the positive displacement pump is selected.

The power transmission system of the invention further comprises a guidepath for guiding the fluid to a suction side of the positive displacement pump after the fluid drives the output member, and a backflow preventing mechanism preventing the fluid in the guidepath from returning to a discharging side of the positive displacement pump.

The power transmission system of the invention is further characterized in that the discharging side of the positive displacement pump is situated closer to a rotation axis of the input member than the input member; the guidepath is formed by a side face of the input member; and the backflow preventing mechanism is formed by tapering the side face of the input member toward an outer end of the input member so as to enlarge a flow area of the guidepath.

According to the invention, therefore, the positive displacement pump is driven by the prime mover, and the output member is rotated by the fluid discharged from the positive displacement pump. Meanwhile, the rotational direction of the output member can be switched between forward direction and backward direction by the rotational direction switching mechanism.

In addition to the above advantageous effects, the route of the fluid can be switched between the first flow route and the second flow route, by controlling the fluid suction condition or a fluid discharging condition of the positive displacement pump. Here, in case the first flow route is selected, a power to rotate the output member in the forward direction is established. Alternatively, in case the second flow route is selected, a power to rotate the output member in the backward direction is established. That is, the power transmission can be carried out in different rotational directions of the output member in case of driving the output member by the fluid discharged from the positive displacement pump.

Also, a component force according to the kinetic energy of the case in which the fluid flows along a blade, or of the case in which the fluid collides against the blade, is transmitted to the output member and the output member is thereby rotated.

As explained above, the amount of the fluid fed from the positive displacement pump to the output member in the direction to rotate the output member backwardly is reduced in case the route of rotating the output member in the forward direction is selected. Therefore, an increase in a kinetic energy to rotate the output member backwardly is restrained. For this reason, the power transmission in the direction to rotate the output member backwardly can be interrupted certainly.

In addition to above, according to the invention, the power of the prime mover is transmitted to the input member to drive the positive displacement pump. It is also possible to rotate the output member in the forward direction by connecting the connecting member selectively with the output member to transmit the power from the input member.

In case the flow route of rotating the output member in the backward direction by the fluid discharged from the positive displacement pump is selected, moreover, the power transmission to rotate the output member in the forward direction can be interrupted certainly.

In case the flow route of rotating the output member in the backward direction by the fluid discharged from the positive displacement pump is selected, still moreover, the fluid discharged from the positive displacement pump is jetted onto the output member, and the power transmission to rotate the output member in the forward direction can be interrupted certainly.

Further, according to the invention, the fluid can be guided to the suction side of the positive displacement pump after the fluid drives the output member. For this reason, the flow rate of the fluid to be sucked into the positive displacement pump can be secured reliably. Also, since the fluid in the guidepath is prevented from returning to a discharging side of the positive displacement pump, an amount of the fluid sucked into the positive displacement pump is thereby secured much reliably.

Furthermore, since the guidepath is widened toward the outer end of the input member, the fluid in the guidepath is guided toward outside where a flow resistance (or the pressure) is low. For this reason, the fluid can be prevented from flowing back to the suction side certainly.

BRIEF DESCRIPTION OF THE DRAWINGS

Fig. 1 is a sectional view showing one example of a radial piston pump applied to a power transmission system of the invention.

Fig. 2 is a conceptual drawing showing a vehicle comprising the power transmission system of the invention and a control line thereof.

Fig. 3 is a view showing a circumferential section of the impeller shown in Fig. 1.

Fig. 4 is a sectional view partially showing another example of a radial piston pump applied to a power transmission system of the invention.

Fig. 5 is a sectional view partially showing still another example of a radial piston pump applied to a power transmission system of the invention.

Fig. 6 is a view showing a circumferential section of the impeller shown in Fig. 5.


BEST MODE FOR CARRYING OUT THE INVENTION

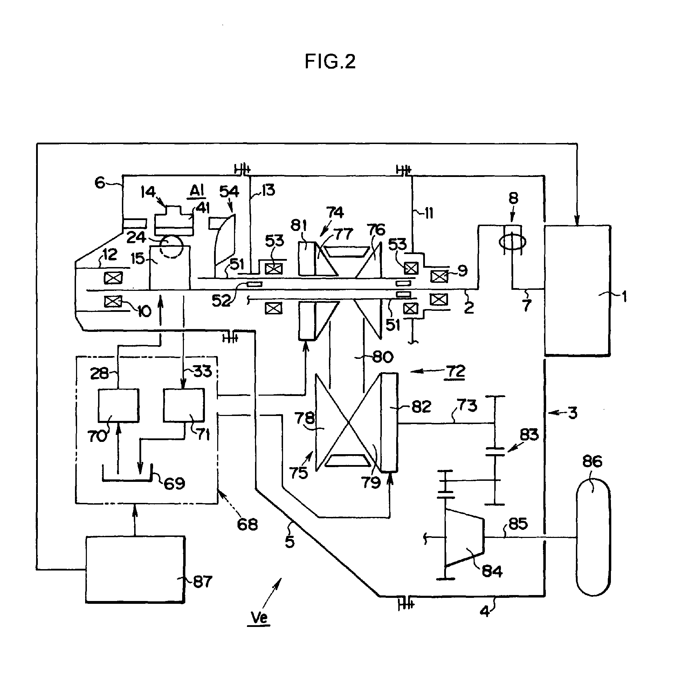

Next, here will be described the present invention in connection with its specific examples. One example of a configuration of a vehicle Ve comprising a power transmission system of the invention including a power train and a control line is schematically illustrated in Fig. 2. First of all, the power train of the vehicle Ve will be explained hereinafter. There is provided an engine 1 as a prime mover, and an engine torque is transmitted to an input shaft 2. The input shaft 2 is disposed in a transaxle case 3. The transaxle case 3 comprises a front case 4, a center case 5 and a rear case 6, and the center case 5 is arranged between the front case 4 and the rear case 6. The front case 4 and the center case 5 are joined by not shown screw members, and the center case 5 and the rear case 6 are joined by not shown screw members. The input shaft 2 extends across the front case 4, the center case 5 and the rear case 6 in a transverse direction of the vehicle Ve. On a power transmission route between the input shaft 2 and a crankshaft 7 of the engine 1, there is provided a damper mechanism 8.

Bearings 9 and 10 are provided to hold the input shaft 2 in a rotatable manner. A bulkhead 11 extends from an inner face of the front case 4, and the bearing 9 is supported by the bulkhead 11. On the other hand, a sleeve 12 extends from an inner face of the rear case 6, and the bearing 10 is supported by the sleeve 12. In addition, a bulkhead 13 extends from an inner face of the center case 5. In the transaxle case 3, a space defined by the rear case 6 and the bulkhead 13 is an oil pump storage area A1, and an oil pump 14 is housed therein. The oil pump 14 is a positive displacement oil pump, in which fluid is pushed from a suction side to a discharging side by moving an internally enclosed space defined by a movable member in a casing, or by changing an inner volume of the enclosed space. In the embodiment to be explained hereafter, a radial piston pump 14 is employed as the positive displacement oil pump.


(Embodiment 1)

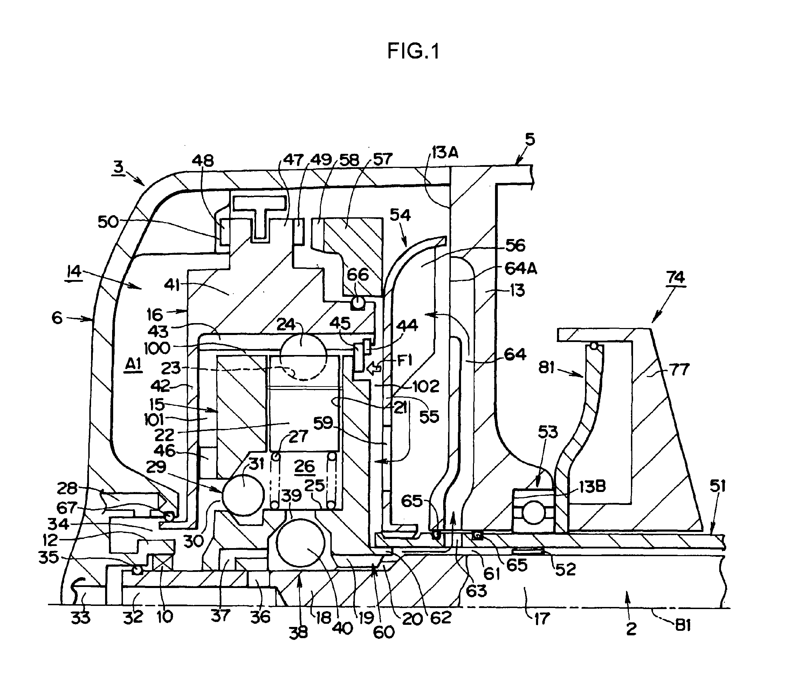

Here will be explained an example of a configuration of the radial piston pump 14 employed in the embodiment 1 with reference to Fig 1. The radial piston pump 14 comprises an inner race 15 and an outer race 16. The inner race 15 is mounted on the input shaft 2. In other words, the inner race 15 is formed annularly around a center axis B1 of the input shaft 2. The input shaft 2 comprises a diametrically large portion 17, and a diametrically small portion 18 on which the inner race 15 is mounted. There are formed internal teeth 19 on an inner circumference of the inner race 15, and external teeth 20 on an outer circumference of the diametrically small portion 18 of the input shaft 2. Here, the internal teeth 19 and the external teeth 20 are meshed with each other. That is, the input shaft 2 is splined to the inner race 15 so as to rotate integrally with the inner race 15 around an axis B1. Additionally, the inner race 15 is movable on the input shaft 2 in the axial direction.

The inner race 15 comprises a plurality of cylinders 21 formed equiangularly. Specifically, the cylinder 21 is a cylindrical concave opening to an outer circumference of the inner race 15, and the cylinders 21 are arranged radially around the axis B1. A piston 22 is housed in each cylinder 21 reciprocatably in the radial direction of the inner race 15. The piston 22 comprises a depressed portion 23 on its outer end face, and a rolling member 24 is held therein in a rollable manner. The rolling member 24 can be exemplified by a ball or a roller. A space between an inner end face 25 of the cylinder 21 and the piston 22 is an oil chamber 26. Elastic members, more specifically, compression coil springs 27 made of metal are arranged in the oil chamber 26 so as to apply pressing force to the piston 22 in the outward direction of the cylinder 21.

There is formed an oil passage 28 in the rear case 6, and a check valve 29 is arranged on a route connecting the oil passage 28 and the oil chamber 26. The check valve 29 comprises a suction port 30 and a valve element 31 for opening and closing the suction port 30. The check valve 29 allows the oil in the oil passage 28 being sucked into the oil chamber 26, and prevents the oil in the oil chamber 26 from flowing out therefrom. An oil passage 32 is formed in the input shaft 2 along the axis B1, and is opened to an end face of the input shaft 2. In the rear case 6, there is also formed another oil passage 33 which is communicated with the oil passage 32. Further, still another oil passage 34 is formed in the rear case 6 for connecting the suction port 30 and the oil passage 28. The oil passages 32 and 33 are segregated from the oil passage 34 liquid-tightly by a sealing member 35. Here, the oil passage 34 is a space defined by the rear case 6, the inner race 15, the input shaft 2 and an after-mentioned inward flange of an outer race.

In the input shaft 2, there is formed an oil passage 36 opening to an outer circumference of the diametrically small portion 18, which is communicated with the oil passage 32. Also, in the inner race 15, there is formed an oil passage 37 opening to an inner circumference of the inner race 15, and a communicating area between the oil passages 36 and 37 is changed by sliding the inner race 15 in the axial direction of the input shaft 2. A check valve 38 is arranged on a route connecting the oil passage 37 and the oil chamber 26. The check valve 38 comprises a discharging port 39 connected to the oil chamber 26 and the oil passage 37, and a valve element 40 for opening and closing the discharging port 39. The check valve 38 allows the oil in the chamber 26 to be discharged therefrom, and prevents the oil outside of the oil chamber 26 from flowing into the oil chamber 26.

An outer race 16 comprises a cylindrical portion 41 enclosing the inner race 15, and an inward flange 42 formed on an inner circumferential end of the cylindrical portion 41 at the bearing 10 side (i.e., the left side in Fig. 1). The cylindrical portion 41 comprises a cam face 43 formed on its inner circumference. The cam face 43 is formed annularly around the axis B1, and a surface profile thereof in the circumferential direction is a continuous wave pattern. Specifically, the cam face 43 is alternately curved inwardly and outwardly in the radial direction. An inner diameter of the cylindrical portion 41 thus structured is larger than an outer diameter of the inner race 15. The rolling member 24 is partially ejected from the outer circumferential end of the inner race 15 to be contacted with the cam face 43, and is capable of rolling on the cam face 43 in the circumferential direction of the outer race 16. Further, an oil passage 100 is formed between the outer circumferential face of the outer race 16 and the cam face 43.

In the cylindrical portion 41, a snap ring 44 is attached to the inner circumferential face of the cylindrical portion 41, and a plate 45 is arranged to be contacted with the end face of the inner race 15. The plate 45 is formed into an annular shape, and positioned between the snap ring 44 and the inner race 15 in the axial direction. Also, a plurality of stoppers 46 are formed on the end face of the inner race 15 of the inward flange 42 side (i.e., the left side in Fig. 1) in the circumferential direction. Thus, the inner race 15 and the outer race 16 are positioned in the axial direction by the stoppers 46 contacted with the inward flange 42 and the inner race 15 contacted with the plate 45. That is, the inner race 15 and the outer race 16 are arranged to move integrally in the axial direction. Between the inward flange 42 and the inner race 15, there is formed an oil passage 101 which is communicated with the oil passage 100. The oil passage 101 is also communicated with the suction port 30 through a clearance between the stoppers 46. Additionally, the rear case 6 is provided with a sealing member 67, and the sealing member 67 is contacted with the inner circumferential end of the inward flange 42. That is, the oil passage 34 is sealed by the sealing members 67 and 35 liquid-tightly.

On the outer circumference of the cylindrical portion 41 of the outer race 16, there is formed an annular outward flange 47 in the circumferential direction. Engagement (or teeth) portions 48 and 49 as a plurality of convexities are formed on both axial end faces of the outward flange 47 in the circumferential direction. On the other hand, an engagement portion (or teeth) portion 50 as a plurality of convexities are formed on the rear case 6 and on the common circumference with the engagement portion 48. The outer race 16 thus structured is movable integrally with the inner race 15 in the axial direction of the input shaft 2, and a (not shown) moving mechanism for applying a force to move the outer race 16 in the axial direction. The moving mechanism may be a (not shown) system for transmitting a power of a driver to change a shift position to the outer race 16 through a mechanical transmission such as a cable or a link. Alternatively, the moving mechanism may also be a (not shown) system, in which an operation to change the shift position is converted into an electronic signal for driving a not shown actuator, and an actuating power of the actuator is transmitted to the outer race 16.

In the transaxle case 3, a hollow primary shaft 51 is arranged around the input shaft 2, and a needle bearing 52 is provided to allow those hollow primary shaft 51 and input shaft 2 to rotate relatively to each other. Also, two of bearings 53 are arranged in the axial direction to hold the primary shaft 51 in a rotatable condition. One of the bearings 53 is positioned in a concave portion 13B of bulkhead 13 as shown in Fig. 1, and the other bearing 53 is attached to the bulkhead 11 as shown in Fig. 2. Both ends of the primary shaft 51 are individually inserted into inner rings of the bearings 53. The primary shaft 51 extends inside of the center case 5 and the rear case 6, and an impeller 54 is mounted on the end portion of the rear case 6 side, i.e., in the left side in Fig. 1. The impeller 54 is connected with the primary shaft 51 at its inner circumferential end, that is, the impeller 54 and the primary shaft 51 are arranged to rotate integrally. Further, the impeller 54 comprises an annular plate 55 developing around the primary shaft 51, and a plurality of blades 56 arranged radially on the plate 55.

The impeller 54 is arranged between the bulkhead 13 and the inner race 15 in the axial direction of the input shaft 2, and further comprises an annular connecting portion 57 on its outer circumferential side. On the surface of the connecting portion 57 facing to the engagement portion 49, there are formed an engagement portion 58 as a plurality of projections on a common circumference with the engagement portion 49. When the outer race 16 moves to the left side in Fig. 1 along the axial direction, the engagement portions 48 and 50 are engaged with each other and the engagement portions 49 and 58 are released from each other. To the contrary, when the outer race 16 moves to the right side in Fig. 1 along the axial direction, the engagement portions 49 and 58 are engaged with each other and the engagement portions 48 and 50 are released from each other. Between the plate 55 and the inner race 15, there is formed an oil passage 102 which is communicated with the oil passage 100. In order to seal the oil passage 102 liquid-tightly, a sealing member 66 is provided on the outer circumference of the outer race 16. Further, there is formed an oil passage 59 penetrating the plate 55 of the impeller 54 in the axial direction at a portion inward of the blades 56. The oil passage 59 is communicated with the oil passage 102.

In the clearance between the internal teeth 19 and the external teeth 20, there is formed an oil passage 60 which is allowed to communicate with the discharging port 39. Also, in the clearance between the diametrically large portion 17 and the primary shaft 51, there is formed an oil passage 61 which is allowed to communicate with the oil passage 60. At an inner circumferential end of the inner race 15, a cylindrical shutter 62 extending in the axial direction is formed in the primary shaft 51 side (i.e., the right side in Fig. 1). That is, when the inner race 15 moves to the left side in Fig. 1 on the input shaft 2, the shutter 62 comes out of the oil passage 61 so that the oil passages 60 and 61 are communicated with each other. To the contrary, when the inner race 15 moves to the right side in Fig. 1 on the input shaft 2, the shutter 62 enters into an opening end of the oil passage 61 so that the oil passages 60 and 61 are disconnected, or a communicating area between the oil passages 60 and 61 is narrowed.

Further, an oil passage 63 is formed to penetrate the primary shaft 51 in the radial direction, and the oil passage 63 is communicated with the oil passage 61. Also, an oil passage 64 is formed in the bulkhead 13. One of openings of the oil passage 64 is formed in an inner circumferential face of the bulkhead 13, and the other opening of the oil passage 64, i.e., an opening 64A of the outer circumferential side is formed in an end face 13A of the bulkhead 13. A plurality of the oil passages 64 are formed radially in the bulkhead 13, and each opening 64A is opposed to the blade 56 on a common circumference. In other words, the openings 64A and the blades 56 are opposed to each other in the axial direction. Additionally, the oil passages 64 are communicated with the oil passage 63. On the outer circumference of the primary shaft 51, there are provided two sealing members 65 to seal clearances between the bulkhead 13 and the primary shaft 51 liquid-tightly. A leakage of the oil flowing between the oil passages 63 and 64 is thereby prevented.

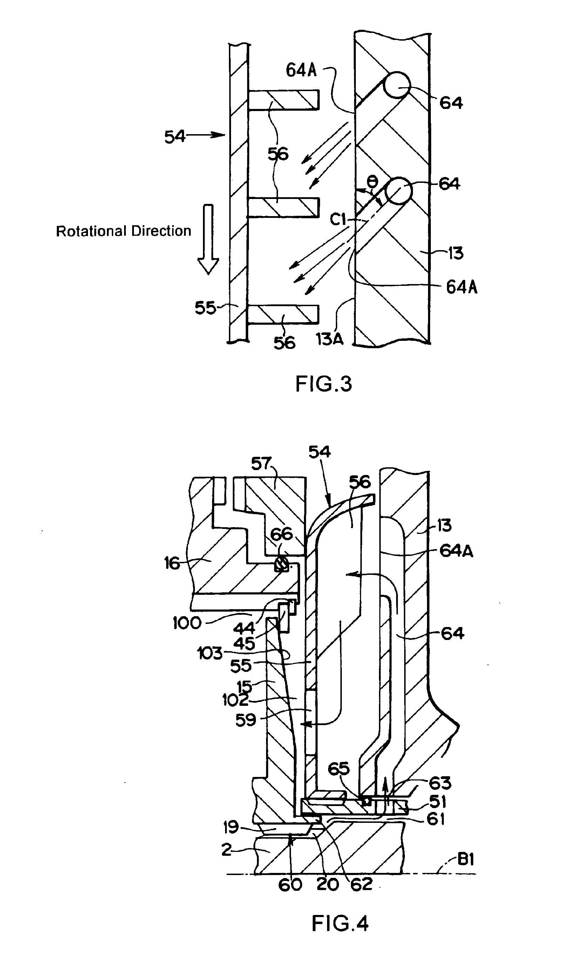

Fig. 3 is an enlarged sectional view showing a cut plane in the axial direction including the blades 56 and the oil passages 64. As shown in Fig. 3, an angle θ between a center line C1 of the oil passage 64 and the end face 13A, i.e., a jet angle of the oil from the oil passage 64 is smaller than 90 degrees. In this embodiment, a rotational direction of the engine 1 is clockwise (i.e., in the forward direction) with respect to the primary shaft 51. Meanwhile, the angle θ, or an inclination of the oil passage 64 is set to rotate the impeller 54 anti-clockwise (i.e., in the backward direction) contrary to the rotational direction of the engine 1, by flowing the oil discharged from the oil passage 64 along the blade 56 of the impeller 54 to apply the force according to the kinetic-energy of the oil to the blade 54. A turbine mechanism is thus constructed by the impeller 54, the oil passages 64 and so on. A route to feed the oil to the oil passages 64 will be explained later.

As shown in Fig. 2, the radial piston pump 14 thus structured is connected to a hydraulic control unit 68. The hydraulic control unit 68 comprises an oil pan (or a reservoir) 69 to which the oil passages 28 and 33 are connected. On the oil passage 28, there is provided a suction amount control valve 70. The suction amount control valve 70 is constructed of a known solenoid valve or the like, and is capable of controlling an amount of the oil sucked into the radial piston pump 14 flowing from the oil pan 69 via the oil passage 28. On the oil passage 33, on the other hand, there is provided a discharging amount control valve 71. The discharging amount control valve 71 is constructed of a known solenoid valve or the like, and is capable of controlling an amount of the oil discharged from the radial piston pump 14 to the oil passage 33.

Here, as shown in Fig. 2, a continuously variable transmission is provided in the transaxle case 3, more specifically, in the center case 5. In this embodiment, a belt-type continuously variable transmission 72 is employed as a continuously variable transmission. The belt-type continuously variable transmission 72 comprises a secondary shaft 73 in addition to the aforementioned primary shaft 51. The secondary shaft 73 is arranged in parallel with the primary shaft 51, and the belt-type continuously variable transmission 72 further comprises a primary pulley 74 which rotates integrally with the primary shaft 51, and a secondary pulley 75 which rotates integrally with the secondary shaft 73.

The primary pulley 74 comprises a fixed sheave 76 incapable of moving in the axial direction, and a movable sheave 77 capable of moving in the axial direction. Also, the secondary pulley 75 comprises a fixed sheave 78 incapable of moving in the axial direction, and a movable sheave 79 capable of moving in the axial direction. In order to link the primary pulley 74 and the secondary pulley 75, an endless-type belt 80 is applied to those sheaves. Further, there are provided a hydraulic servo mechanism 81 for controlling a clamping pressure applied to the belt 80 by the primary pulley 74, and a hydraulic servo mechanism 82 for controlling a clamping pressure applied to the belt 80 by the secondary pulley 75. An amount and a pressure of the operating oil to be fed to not shown oil chambers of the hydraulic servo mechanisms 81 and 82 are controlled by the hydraulic control unit 68. That is, the hydraulic control unit 68 comprises a not shown solenoid valve or the like to control the flow rate and the pressure of the operating oil of the hydraulic servo mechanisms 81 and 82.

A gear transmission mechanism 83 to which a torque of the secondary shaft 73 is transmitted, and a differential 84 which is connected to a wheel 86 through a drive shaft 85, are further provided in the transaxle case 3. The engine 1 is a power unit for converting thermal energy resulting from the fuel combustion into kinetic energy, and it can be exemplified by e.g., an external combustion engine and an internal combustion engine. In this embodiment, an internal combustion engine, i.e., a gasoline engine, a diesel engine or an LPG engine etc., is employed as the engine 1. For the purpose of controlling an output of the engine 1, there are provided an air intake control device (i.e., an electronic throttle valve) a fuel injection control device and so on.

Next, a control line of the vehicle Ve will be explained hereinafter. There is provided an electronic control unit 87 as a controller for controlling the vehicle Ve entirely. For example, signals from an ignition switch, a sensor detecting an acceleration demand (e.g., an operating state of an acceleration pedal), a sensor detecting a braking demand (e.g., an operating state of a brake pedal), a sensor detecting a revolution frequency of the engine 1, a sensor detecting an opening angle of a throttle, a sensor detecting a revolution frequency of the input shaft 2, a sensor detecting a revolution frequency of the primary shaft 51, a sensor detecting a revolution frequency of the secondary shaft 73, a sensor detecting a shift position and so on, are inputted to the electronic control unit 87. Meanwhile, the electronic control unit 87 outputs a signal for controlling the hydraulic control unit 68, a signal for controlling the engine 1 and so on.

Here will be explained a principle of power transmission between the input shaft 2 and the primary shaft 51 in case of the vehicle Ve thus structured. In case a shift position is shifted to Drive position while the engine 1 is being driven, the outer race 16 is moved to the right side in Fig. 1. As a result, the engagement portions 49 and 58 are engaged with each other, and the engagement portions 48 and 50 are released from each other. That is, the outer race 16 is connected with the impeller 54 in a power transmittable manner by an engaging force of the engagement portions 49 and 58. In this case, the inner race 15 is also moved to the right side in the axial direction together with the outer race 16, and the oil passages 36 and 37 are thereby communicated with each other. As a result of this migration of the inner race 15, the shutter 62 is inserted into the clearance between the diametrically large portion 17 of the input shaft 2 and the primary shaft 51, and the communicating area between the oil passages 60 and 61 is thereby narrowed.

On the other hand, an oil pressure of the oil chamber 26 and an energizing force of the compression coil spring 27 are applied to the piston 22 attached to the inner race 15 so that the rolling member 24 is pushed onto the cam face 43. When the input shaft 2 and the inner race 15 are rotated integrally by the engine torque, the rolling member 24 is rolled along the cam face 43. Since the surface of the cam face 43 waves smoothly in the circumferential direction, the piston 22 is reciprocated within the cylinder 21 in the radial direction of the inner race 15.

A capacity of the oil chamber 26 is changed by such reciprocation of the piston 22 within the cylinder 21. Specifically, the capacity of the oil chamber 26 is enlarged when the piston 22 moves away from the axis B1, and to the contrary, the capacity of the oil chamber 26 is reduced when the piston 22 moves closer to the axis B1. When the capacity of the oil chamber 26 is enlarged, the pressure in the oil chamber 26 becomes negative pressure. Consequently, the check valve 29 is opened to allow the oil in the oil pan 69 to be sucked into the oil chamber 26 via the oil passages 28 and 34. In this case, the check valve 38 is closed to prevent the oil in the oil passage 37 from flowing back to the oil chamber 26.

Then, when the piston 22 is moved closer to the axis B1 by the relative rotation of the inner race 15 and the outer race 16, the capacity of the oil chamber 26 is reduced so that the pressure in the oil chamber 26 is raised. Consequently, the check valve 29 is closed to prevent the oil in the oil passage 34 from being sucked into the oil chamber 26, and to prevent the oil in the oil chamber 26 from flowing back to the oil passage 34. In this case, the check valve 38 is opened to allow the oil in the oil chamber 26 to be discharged to the oil passage 33 via the oil passages 37, 36 and 32. Then, the oil in the oil passage 33 is returned to the oil pan 69. Thus, the oil is sucked into the radial piston pump 14 and discharged from the radial piston pump 14 alternately by the reciprocation of the piston 22 in the radial direction of the inner race 15.

According to this embodiment, an oil suction amount and an oil discharging amount of the radial piston pump 14 can be controlled as explained in the following. First of all, in case the opening angle of the suction amount control valve 70 is increased, the oil suction amount of the radial piston pump 14 is increased. To the contrary, in case the opening angle of the suction amount control valve 70 is decreased, the oil suction amount of the radial piston pump 14 is decreased. Meanwhile, in case the opening angle of the discharging amount control valve 71 is widened, a flow resistance of the oil in the oil passage 33 is reduced so that the amount of the oil in the oil chamber 26 is decreased. To the contrary, in case the opening angle of the discharging amount control valve 71 is narrowed, the flow resistance of the oil in the oil passage 33 is increased so that the amount of the oil in the oil chamber 26 is hardly decreased. Thus, the oil suction amount and the oil discharging amount of the oil chamber 26 can be adjusted to control the oil pressure therein in proportion to the oil amount. The oil pressure of the oil chamber 26 influences the torque transmitted between the input shaft 2 and the outer race 16.

At the contact portion between the rolling member 24 and the cam face 43, a component of the pushing force established by the oil pressure of the oil chamber 26 and the compression coil spring 27 is acting in the direction to rotate the outer race 16. That is, a torque according to the component force is transmitted to the outer race 16. More specifically, in case the oil amount in the oil chamber 26 is decreased so that the oil pressure thereof is dropped as explained above, the force to push the piston 22 is weakened. For this reason, the torque transmitted to the outer race 16 from the input shaft 2 is decreased. To the contrary, in case the oil amount in the oil chamber 26 is increased so that the oil pressure thereof is raised, the force to push the piston 22 is increased. For this reason, the torque transmitted to the outer race 16 from the input shaft 2 is raised.

As explained above, in case the Drive position is selected, the outer race 16 and the impeller 54 are connected in the power transmittable manner. Therefore, the torque of the input shaft 2 is transmitted to the impeller 54 through the outer race 16, and the torque of the impeller 54 is transmitted to the primary shaft 51. Additionally, in case the Drive position is selected, the communicating area between the oil passages 60 and 61 is narrowed by the shutter 62. This means that the oil discharged from the oil chamber 26 is thereby prevented certainly from flowing into the oil passage 61 via the oil passage 60, otherwise, a flow rate of the oil flowing into the oil passage 61 via the oil passage 60 is thereby minimized. For this reason, it is possible to certainly avoid a reverse rotation of the impeller 54 caused by the kinetic energy of the oil. Here, the reverse rotation of the impeller 54 will be explained later.

To the contrary, in case the shift position is shifted to Reverse position, the outer race 16 is moved to the left side in Fig. 1. As a result, the engagement portions 49 and 58 are released from each other, and the engagement portions 48 and 50 are engaged with each other. That is, the outer race 16 is fixed with the rear case 6, and a power transmission between the outer race 16 and the impeller 54 is thereby disconnected. Also, as shown in Fig. 1, the shutter 62 comes out of the clearance between the diametrically large portion 17 of the input shaft 2 and the primary shaft 51, and the oil passages 60 and 61 are thereby communicated with each other. On the other hand, the oil passage 36 is blocked by the inner race 15, or the communicating area between the oil passages 36 and 37 is thereby narrowed.

In case the engine torque is transmitted to the input shaft 2 when the oil passages 60 and 61 are thus connected, the oil discharged from the oil chamber 26 by the movement of the pistons 22 is fed to the oil passage 64 through the oil passages 60, 61 and 63, and jetted from the openings 64A of the oil passages 64 to the impeller 54. The jetted oil forms a jet blast and collides against the blades 56 so that the torque to rotate the impeller 54 and the primary shaft 51 is established by the kinetic energy of the oil. Here, the rotational direction of the impeller 54 of the case in which the Reverse position is selected is opposite to that of the case in which the Drive position is selected. That is, in case the Reverse position is selected, the kinetic energy of the input shaft 2 is converted into a kinetic energy of the oil by the radial piston pump 14, and the kinetic energy of the oil is converted into a kinetic energy of the impeller 54. In other words, the oil passage 64 and the impeller 54 forms so-called a hydraulic power transmission which transmits power by a kinetic energy of fluid. Additionally, in case the Reverse position is selected, since the engagement portions 49 and 58 are released from each other, the power of the input shaft 2 can be interrupted certainly, that is, the power of the input shaft 2 will not be transmitted to the impeller 54 via the outer race 16.

Thus, the radial piston pump 14 has a function to feed the sucked oil to an oil requiring portion, as well as a function to control a power transmitting condition between the input shaft 2 and the outer race 16 (i.e., a function as a clutch). Especially, the function to control a power transmitting condition includes a function to switch the power transmitting condition selectively between a first power transmitting condition to transmit the power by engaging the engagement portions 49 and 58, and a second power transmitting condition to transmit the power utilizing a kinetic energy of the oil by jetting the oil to the impeller 54. Thus, it is possible to control the torque transmitted between the input shaft 2 and the primary shaft 51 by controlling the oil pressure in the oil chamber 26. In case the Drive position is selected, a difference between the revolution frequencies of the input shaft 2 and the primary shaft 51 can also be controlled by controlling the oil pressure in the oil chamber 26. Specifically, the difference between the revolution frequencies becomes smaller with a pressure rise in the oil chamber 26. The engine torque is thus transmitted to the primary shaft 51 of the belt-type continuously variable transmission 72 through the input shaft 2 by the principle thus far explained. Then, the torque of the primary shaft 51 is transmitted to the secondary shaft 73 through the belt 80. The torque of the secondary shaft 73 is further transmitted to the wheel 86 through the differential 84.

In the belt-type continuously variable transmission 72, a feeding condition of the operating oil to the hydraulic servo mechanism 81 is controlled by the hydraulic control unit 68. For instance, running radii of the belt 80 on the primary pulley 74 and on the secondary pulley 75 are controlled by controlling a feeding amount of the operating oil to the hydraulic servo mechanism 81. As a result, a speed change ratio of the belt-type continuously variable transmission 72, i.e., a ratio between the revolution frequencies of the primary shaft 51 and the secondary shaft 73 can be controlled steplessly or continuously. In addition to this speed change control, a torque capacity of the belt-type continuously variable transmission 72 is controlled by adjusting the clamping pressure applied to the belt 80 by the secondary pulley 75.

A required driving force for the vehicle Ve is determined on the basis of, e.g., a vehicle speed and a acceleration demand (e.g., an opening angle of the accelerator), and a target revolution frequency of the engine 1 and a target engine torque are obtained on the basis of the determination result. Specifically, a target engine output is determined in accordance with the required driving force; the target revolution frequency of the engine 1 to achieve the target engine output at the optimum fuel consumption is determined; and the target engine torque is determined in accordance with the target revolution frequency of the engine 1. Then, the speed change ratio of the belt type continuously variable transmission 72 is controlled to approximate the actual revolution frequency of the engine 1 to the target revolution frequency of the engine 1. At the same time, an actual engine torque is approximated to the target engine torque by controlling the electronic throttle valve or the like.

In case Neutral position or Parking position is selected, the outer race 16 is moved to the position of the case when the Drive position is selected. Specifically, the engagement portions 49 and 58 are engaged with each other, and the engagement portions 48 and 50 are released from each other. Then, the torque capacity of the radial piston pump 14 is reduced by lowering the oil pressure in the oil chamber 26 until the power transmission between the input shaft 2 and the outer race 16 is disrupted.

As thus far described, according to the Embodiment 1, the radial piston pump 14 is driven by the engine torque to suck or discharge the oil in any of the cases when the Drive position is selected and when the Reverse position is selected. Also, the rotational direction of the primary shaft 51 can be switched between the forward and backward directions by moving the outer race 16 as a part of the radial piston pump 14 in the axial direction. Therefore, there is no need for arranging a forward/backward switching mechanism to switch the rotational direction of the primary shaft 51. For this reason, the power transmission system can be downsized, and a production cost of the power transmission system can also be curbed. Additionally, the radial piston pump 14 is employed in this embodiment as thus far explained, therefore, in case the Reverse position is selected, a drag torque is hardly generated if the oil pressure in the oil chamber 26 is lowered. That is, since the drag torque is not generated, an increase in a power loss can be suppressed. For this reason, a fuel economy of the engine 1 can be improved according to this embodiment in comparison with a comparative example. Here, the comparative example can be exemplified by a case in which frictional engagement elements such as a wet clutch and a brake are used as a forward/backward switching mechanism.

Also, a flow rate of the oil discharged from the oil passage 64 can be controlled according to an area of the opening 64A of the oil passage 64. For this reason, the torque of the primary shaft 51 can be increased without enlarging a size of the radial piston pump 14. Moreover, a high torque can be generated at the impeller 54 without relying on the revolution frequency of the engine 1, by increasing a flow velocity of the oil by narrowing the opening area of the opening 64A. This enables to set a stall speed as a revolution frequency of the input shaft 2 as low as possible in case the input shaft 2 is rotated when the primary shaft 51 is halted. For this reason, the engine 1 can be driven at high combustion efficiency so that the fuel economy is further improved. Further, a relation between an injection pressure of the oil jetted from the oil passage 64 and a magnitude of the torque generated at the impeller 54 can be set arbitrarily by adjusting the angle θ of the oil passage 64. For example, provided that an injection pressure and an injection amount of the oil is constant, the torque generated at the impeller 54 is raised if the angle θ is narrowed. This improves power transmission efficiency between the input shaft 2 and the primary shaft 51, so that the revolution frequency of the engine 1 can be lowered as low as possible. Additionally, a change in the revolution frequency of the engine 1 from the start of the vehicle Ve to the vehicle Ve starts cruising can be smoothened.

According to the embodiment, between the input shaft 2 and the primary shaft 51, there is formed the oil passage 61 for feeding the oil to the oil passage 64. Since the oil passage 61 is formed all around the input shaft 2, a cross-section of the oil passage 61 can be ensured larger in comparison with the case in which the oil passage is formed inside of the input shaft 2. For this reason, the amount of the oil jetted from the oil passage 64 can be increased as much as possible. Therefore, the primary shaft 51 can be rotated at a high revolution frequency. Here, the oil discharged from the radial piston pump 14 and collided against the impeller 54 then returns to the suction port 30 via the oil passages 59, 102, 100 and 101. Therefore, a drop in the amount of the oil to be sucked by the radial piston pump 14 can be minimized. For this reason, the radial piston pump 14 can be driven at a higher speed in comparison with the case in which the radial piston pump 14 sucks the oil only from the oil pan 69.

Moreover, since the oil collided against the impeller 54 can be sucked into the oil chamber 26 again, a pressure outside of the oil chamber 26 can be lowered so that the strength of the compression coil spring 27 can also be reduced. Therefore, the pushing force to push the rolling member 24 onto the cam face 43 can be reduced. For this reason, between the input shaft 2 and the primary shaft 51, a power loss of the case in which the Reverse position is selected can be minimized. Also, since the oil passed through the oil passage 59 then passes through the oil passage 100, the contact portion between the cam face 43 and the rolling member 24 can be lubricated and cooled. For this reason, durability of the radial piston pump 14 can be improved. In addition, according to this embodiment, the outer race 41 is fixed by a part of the rear case 6, therefore, a number of components can be reduced.

According to the Embodiment 1, the bulkhead 13 is formed between the belt-type continuously variable transmission 72 and the impeller 54 in the axial direction, and one of the bearings 53 holding the primary shaft 51 is housed in the concave portion 13B of bulkhead 13. On the other hand, the openings 64A of the oil passages 64 and the plate 55 of the impeller 54 are arranged to be opposed to each other in the axial direction of the primary shaft 51. With this structure, when the oil jetted from the openings 64A of the oil passages 64 collides against the plate 55, a component force F1 acts on the impeller 54 to move the impeller 54 away from the bulkhead 13. Then, a thrust force in the same direction as the component F1 is transmitted to the primary shaft 51, and the bearing 53 into which the primary shaft 51 is inserted is pushed onto the end face of the concave portion 13B. Therefore, the primary shaft 51 can be positioned accurately in the axial direction in the transaxle case 3. Therefore, a displacement of the widthwise center of the belt 80 in the axial direction can be prevented and the durability of the belt 80 is thereby improved. According to the Embodiment 1, moreover, the oil discharged from the discharging port 39 is fed to the oil passages 64 via the oil passages 60 and 61 formed around the input shaft 2. For this reason, there is no need to arrange a sealing device between the input shaft 2 and the primary shaft 51, unlike the comparative example in which the oil discharged from the discharging port 39 is fed to the oil passages 64 through inside of the input shaft 2. That is, a number of components can be reduced. Also, a power loss resulting from a sliding action of such a sealing device on the primary shaft 51 or the input shaft 2 can be prevented and the fuel economy is thereby improved.

According to the radial piston pump 14 of the Embodiment 1, the oil is sucked into the oil chamber 26 through the oil passage 34 in case the Drive position is selected. On the other hand, in case the Reverse position is selected, the oil is sucked into the oil chamber 26 through the oil passage 34, and also, the oil jetted onto the impeller 54 is then sucked into the oil chamber 26 through the oil passages 59, 102, 100 and 101, and the suction port 30. That is, in case the Drive position is selected, a flow route of the oil to be sucked into the oil chamber 26 is one line. On the other hand, there are two routes for the oil to be sucked into the oil chamber 26 in case the Reverse position is selected. Further, in case the Drive position is selected, the oil discharged from the oil chamber 26 is returned to the hydraulic control unit 68 via the oil passages 36 and 33, however, in case the Reverse position is selected, the oil discharged from the oil chamber 26 is fed to the Impeller 54 side via the oil passages 60 and 61. Thus, the oil is sucked into the radial piston pump 14 through different routes in each case when the Drive position is selected and when the Reverse position is selected. Also, the flow routes of the oil discharged from the radial piston pump 14 are also different in each case when the Drive position is selected and when the Reverse position is selected.

Here will be explained corresponding relations between the Embodiment 1 and the present invention. The engine 1 in the embodiment corresponds to the "prime mover" of the invention, and the radial piston pump 14 in the embodiment comprising the inner race 15, the outer race 16, the piston 22, the rolling member 24, the oil chamber 26, the compression coil spring 27, the check valves 29 and 38, the cam face 43 and so on corresponds to "the positive displacement pump" of the invention. Here, the rotational direction switching mechanism of the invention comprises the inner race 15, the outer race 16, the oil passages 36, 37, 59, 60, 61, 62, 63, 64, 100, 101 and 102, the outward flange 47, the engagement portions 48, 49, 50 and 58 and so on. That is, some elements of the radial piston pump 14 are shared by the rotational direction switching mechanism. Also, the oil (including both operating oil and lubricating oil) corresponds to the "fluid" of the invention, and the primary shaft 51, the impeller 54 and the connecting portion 57 correspond to "the output member" of the invention.

The case in which the Drive position is selected in the embodiment corresponds to "the case of rotating the output member in the forward direction" in the invention; and the oil suction amount and the oil discharging amount of the radial piston pump 14 in the embodiment correspond to "the fluid suction condition or a fluid discharging condition of the positive displacement pump" of the invention. Also, the oil passages 28 and 34 in the embodiment where the oil to be sucked into the radial piston pump 14 passes through, and the oil passages 37, 36, 32 and 33 in the embodiment where the oil discharged from the radial piston pump 14 passes through correspond to "the first flow route" of the invention. On the other hand, the case in which the Reverse position is selected in the embodiment corresponds to "the case of rotating the output member in the backward direction" in the invention; and the oil passages 28, 34, 59, 100, 101 and 102 in the embodiment where the oil to be sucked into the radial piston pump 14 passes through, and the oil passages 60, 61, 63 and 64 in the embodiment where the oil discharged from the radial piston pump 14 passes through correspond to "the second flow route" of the invention.

Further, the inner race 15 in the embodiment corresponds to "the input member" of the invention, and the outer race 16 in the embodiment corresponds to "the connection member" of the invention. The shutter 62 and the oil passage 61 in the embodiment correspond to "the mechanism for suppressing an increase in a kinetic energy to rotate the output member backwardly (i.e., a flow rate suppressing device)" of the invention. The impeller 54, and the oil passages 60, 61, 63 and 64 in the embodiment correspond to "the mechanism for generating power to rotate the output member by transmitting a kinetic energy of the fluid to the output member (i.e., the hydraulic power transmission)" of the invention. The inner race 15 and the shutter 62 in the embodiment correspond to "the mechanism for switching a flow route of the fluid between the first flow route and the second flow route (i.e., a route switching device or a direction control valve)" of the invention. The case in which the engagement portions 49 and 58 are engaged in the embodiment corresponds to "the case in which the connection member enables the power transmission to the output member" of the invention, and the case in which the engagement portions 49 and 58 are released in the embodiment corresponds to "the case in which the connection member disable the power transmission to the output member" of the invention. The inner race 15, the shutter 62, and the oil passages 60, 61, 63 and 64 in the embodiment correspond to "the mechanism allowing the fluid discharged from the positive displacement pump to be jetted onto the output member (i.e., a fluid guiding route)" of the invention.

(Embodiment 2)

Next, here will be explained another example of a configuration of the radial piston pump 14 with reference to Fig 4. In fig. 4, the oil passages 60 and 61 are situated inward of the oil passage 102, i.e., closer to the axis B1. On the other hand, the oil passage 59 is situated outward of the oil passages 60 and 61. Additionally, a side face 103 of the inner race 15 is tapered outwardly to enlarge the flowing area of the oil passage 102. Specifically, a clearance in the axial direction between a side face of the plate 55 and the side face 103 of the inner race 15 is widened outwardly. In other words, a wall thickness of the inner race 15 is thinned toward outside in the axial direction. The remaining structures of the Embodiment 2 are identical to those of the Embodiment 1.

According the Embodiment 2, the advantages achieved by the Embodiment 1 can also be achieved by the structures of the Embodiment 2 identical to those of Embodiment 1. In addition, according to the Embodiment 2, a flow resistance in the oil passage 102 is small in its outside (i.e., the oil pressure is lower in outside) for the oil flowing into the oil passage 102. For this reason, an oil supply to the oil passage 100 from the oil passage 102 can be promoted. In other words, the oil in the oil passage 102 is prevented from flowing inwardly, and also prevented from flowing back to the oil passages 60 and 61 through the clearance between the shutter 62 and the primary shaft 51. Namely, a tightness to seal the liquid is improved between the oil passages 102 and 61. Therefore, the oil discharged from the radial piston pump 14 and collides against the impeller 54 is then straightened to be fed to the suction port 30 certainly.

Here will be explained corresponding relations between the Embodiment 2 and the present invention. The oil passage 102 in the embodiment corresponds to "the guidepath" of the invention; the tapered side face 103 in the embodiment corresponds to "the backflow preventing mechanism" of the invention; the suction port 30 in the embodiment corresponds to "the suction side" of the invention; the oil passages 60 and 61 in the embodiment correspond to "the discharging side" of the invention; and the axis B1 in the embodiment corresponds to "the axis of the input member" of the invention. The corresponding relations between the remaining elements in the Embodiment 2 and the invention are identical to those between the Embodiment 1 and the invention.

(Embodiment 3)

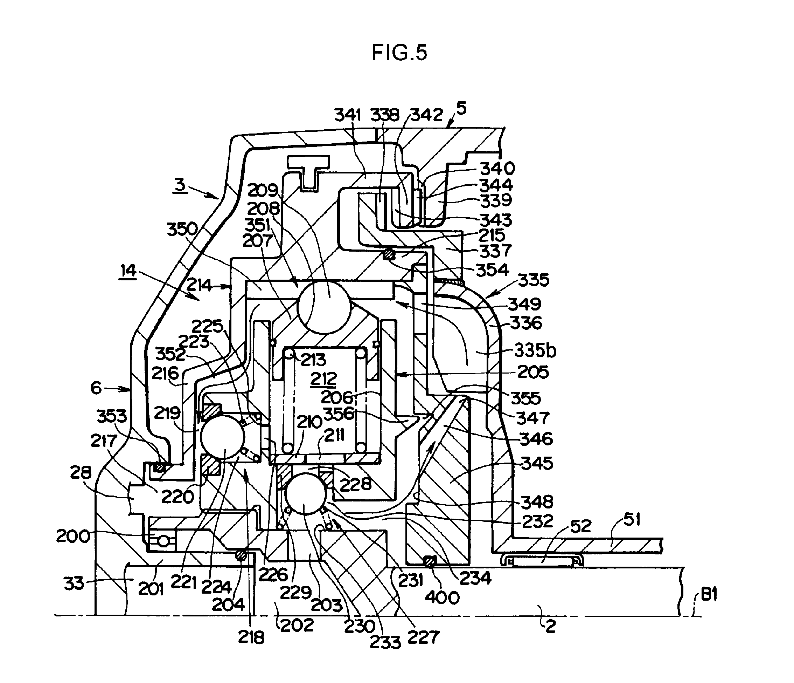

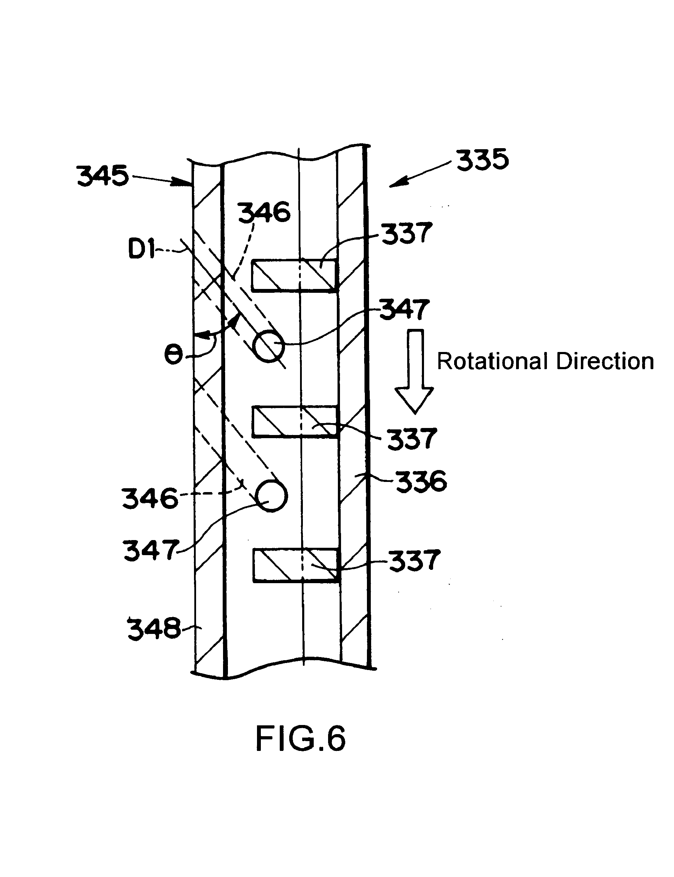

Here will be explained an example of a configuration of the radial piston pump 14 in the Embodiment 3 with reference to Figs 5 and 6. Fig. 5 is a view showing a cross-section including the axis B1, and Fig. 6 is a view partially showing a circumferential cross-section of the radial piston pump 14. As shown in Fig. 5, a bearing 200 is press-fitted into an inner circumference of the input shaft 2 at an end portion of a rear case 6 side. On an inner wall of the rear case 6, there is formed a sleeve 201, and the bearing 200 is held by the sleeve 201. Also, an oil passage 33 is formed in the rear case 6 in the axial direction along the sleeve 201. Meanwhile, an oil passage 202 is formed in the input shaft 2, and an oil passage 203 is opened on an outer circumference of the input shaft 2. Further, a sealing member 204 is provided to seal a clearance between the sleeve 201 and the input shaft 2 liquid-tightly. The oil passage 33 is thus connected to the oil passage 203 through the oil passage 202.

There is provided an inner race 205 which rotates integrally with the input shaft 2. The inner race 205 is formed into an annular shape, and a plurality of cylinders 206 are formed radially around the axis B1. The cylinders 206 are substantially cylindrical concave opening on the outer circumference of the inner race 205. A piston 207 is housed in each cylinder 206 reciprocatably in the radial direction of the inner race 205. On an outer end face of the piston 207, there is formed a dipressed portion 208, and a rolling member 209 is held in the dipressed portion 208 in a rotatable manner. The rolling member 209 may be a ball or a roller. Also, a plate 210 is arranged in the cylinder 206, and an oil passage (or a through hole) 211 is formed in the plate 210. Between the plate 210 and the piston 207, there is formed an oil chamber 212. In the oil chamber 212, there is provided an elastic member, i.e., a compression coil spring 213 made of metal for applying a pressing force to the piston 223 in the outward direction of the cylinder 206. Therefore, the plate 210 functions as a reaction plate against the compression coil spring 213.

In the rear case 6, there is also provided an annular outer race 214. The outer race 214 comprises a cylindrical portion 215 enclosing outside of the inner race 205, and a pendent portion 216 extending inwardly in the radial direction from an end portion of the cylindrical portion 215 in the rear case 6 side. The outer race 214 is movable in the axial direction of the input shaft 2. Also, the pendent portion 216 is formed all around the outer race 214, and an oil passage 217 is formed between an inner circumferential end of the pendent portion 216 and an outer circumference of the end portion of the input shaft 2. On a route (i.e., a flow path) formed from the oil passage 217 to the oil chamber 212, there is provided a check valve 218. The route penetrates a side face of the inner race 205, and the check valve 218 is housed in a penetrated portion. The check valve 218 comprises a valve seat 220 having a suction port 219, a valve element 221 opening and closing the suction port 219, and a compression coil spring 223 as an elastic member for applying a pressing force to push the valve element 221 onto the valve seat 220. More specifically, a valve element housing chamber 224 is formed in the inner race 205, and the valve element 221 and the compression coil spring 223 are housed in the valve element housing chamber 224. For example, a conical coiled spring is used as the compression coil spring 223, and interposed between a wall 225 of the valve element housing chamber 224 and the valve element 221. Additionally, the compression coil spring 223 is designed to reduce its diameter toward the valve element 221 from the wall 225 side. In the inner race 205, moreover, there is formed an oil passage 226 connecting the oil chamber 212 and the valve element housing chamber 224.

On a route from the oil chamber 212 to the oil passage 203, there is provided a check valve 227. The check valve 227 comprises a valve seat 229 having a discharging port 228, a valve element 230 opening and closing the discharging port 228, and a compression coil spring 231 as an elastic member for applying a pressing force to push the valve element 230 onto the valve seat 229. More specifically, a valve element housing chamber 232 is formed between the inner race 205 and the input shaft 2, and the valve element 230 and the compression coil spring 231 are housed in the valve element housing chamber 232. For example, a conical coiled spring is used as the compression coil spring 231, and interposed between a wall 233 of the valve element housing chamber 232 and the valve element 230. Additionally, the compression coil spring 231 is designed to reduce its diameter toward the valve element 230 from the wall 225 side. Between the inner race 205 and the input shaft 2, moreover, there is formed an oil passage 234 connected to the valve element housing chamber 232.

Moreover, there is provided an impeller 335 which rotates integrally with the primary shaft 51. The impeller 335 comprises a disc-shaped plate 336 extending outwardly from an end portion of the primary shaft 51 in the radial piston pump 14 side, and a plurality of blades 335b arranged radially on the plate 336. The blades 335b are formed on a surface of the plate 336 facing to the radial piston pump 14 side. Also, an annular joining member 337 is formed around the impeller 335, and an engagement portion (or teeth) 338 is formed all around the joining member 337. Meanwhile, there is provided a pendent portion 339 hanging from an inner wall of a center case 5, and an engagement portion (or teeth) 340 is formed on the pendent portion 339. The pendent portion 339 and the engagement portion 340 are arranged on a common circumference with the engagement portion 338 keeping a predetermined clearance.

The outer race 214 has a cylindrical projecting portion 341 extending in the axial direction, which is formed integrally with the cylindrical portion 215, and an inward flange 342 is formed on a free end of the projecting portion 341. The inward flange 342 comprises engagement portions (or teeth) 343 and 344 formed entirely on both faces thereof in the axial direction. Additionally, there is provided a (not shown) moving mechanism for applying a force to move the outer race 214 in the axial direction as described in the Embodiment 1.

An end portion of the cylindrical portion 215 of the outer race 214 in the joining member 337 side is connected with an annular wall portion 345. The wall portion 345 is extended from the end portion of the joining member 337 toward a clearance in the axial direction between the inner race 205 and the impeller 335. In order to seal a clearance between an inner face of the wall portion 345 and an outer face of the input shaft 2 liquid-tightly, there is provided a sealing member 400. In the wall portion 345, there is formed an oil passage 346 penetrating therethrough so that the oil passage 234 is communicated with the blades 335b. As illustrated in Fig. 6, an opening end 347 formed on the outer circumferential side of the oil passage 346 is situated inward of the blade 335b in the axial direction. Here, an angle θ between a center line D1 of the oil passage 346 and the wall portion 345 (i.e., a jet angle of the oil from the oil passage 346) is smaller than 90 degrees. In this embodiment, a rotational direction of the engine 1 is clockwise with respect to the primary shaft 51. Meanwhile, the angle θ, or an inclination of the oil passage 346 is set to rotate the impeller 335 anti-clockwise by flowing the oil discharged from the oil passage 364 along the blade 335b of the impeller 335 to apply the force according to the kinetic-energy of the oil to the blade 335b. Additionally, in the wall portion 345, there is formed an oil passage 349 penetrating therethrough in the axial direction and situated on the common circumference with the blades 335b. Thus, a turbine mechanism is constructed by the impeller 335, the oil passages 364 and so on.

On an inner circumferential face of the cylindrical portion 215 of the inner race 214, there is formed a cam face 350. The cam face 350 is formed annularly around the axis B1, and a surface profile thereof in the circumferential direction is a continuous wave pattern. Specifically, the cam face 350 is alternately curved inwardly and outwardly in the radial direction. An inner diameter of the cylindrical portion 215 thus structured is larger than an outer diameter of the inner race 205. The rolling member 209 is partially ejected from the outer circumferential end of the inner race 205 to be contacted with the cam face 350, and is capable of rolling on the cam face 350 in the circumferential direction of the outer race 214. Further, an oil passage 351 is formed between the inner race 205 and the cam face 350, and the oil passage 351 is connected to the oil passage 349. Also, between the pendent portion 216 and the inner race 205, there is formed an oil passage 352 which is connected to the oil passage 351 and the suction port 219.

In order to seal the oil passage 217 liquid-tightly, a sealing member 353 is provided between an inner circumferential end of the pendent portion 216 and the rear case 6. Moreover, a sealing member 354 is provided to seal a clearance between the cylindrical portion 215 of the outer race 214 and the joining member 337 liquid-tightly. Still moreover, on the side face of the wall portion 345 facing to the inner race 205, an annular concave portion 355 is formed around the axis B1 between the oil passages 234 and 349 in the radial direction. On the other hand, on the outer side face of the inner race 205, an annular convex portion 356 projecting toward the concave portion 355 is formed around the axis B1 between the oil passages 234 and 349 in the radial direction. Here, the remaining structures of the Embodiment 3 are identical to those of the Embodiment 1.

Next, here will be explained a principle of power transmission between the input shaft 2 and the primary shaft 51 in the Embodiment 3. In case a shift position is shifted to Drive position while the engine 1 is being driven, the outer race 214 is moved to the left side in Fig. 5. As a result, the engagement portions 343 and 338 are engaged with each other, and the engagement portions 340 and 344 are released from each other. That is, the outer race 214 is connected with the impeller 335 in a power transmittable manner by an engaging force of the engagement portions 343 and 338. In this case, the outer race 214 is also moved in the axial direction to the left side in Fig. 5 together with its wall portion 345 so that an outer wall of the inner race 205 is contacted closely onto a wall face 348 of the wall portion 345. As a result, a communicating area between the oil passages 234 and 346 is narrowed, or the oil passages 234 and 346 are disconnected.

On the other hand, an oil pressure of the oil chamber 212 and an energizing force of the compression coil spring 213 are applied to the piston 207 attached to the inner race 205 so that the rolling member 209 is pushed onto the cam face 351. When the input shaft 2 and the inner race 205 are rotated integrally by the engine torque, the rolling member 209 is rolled along the cam face 351, and the piston 207 is reciprocated within the cylinder 206 in the radial direction of the inner race 205.

Here, the capacity of the oil chamber 212 is enlarged when the piston 207 moves away from the axis B1, and to the contrary, the capacity of the oil chamber 212 is reduced when the piston 207 moves closer to the axis B1. When the capacity of the oil chamber 212 is enlarged, the pressure in the oil chamber 212 becomes negative pressure. Consequently, the check valve 218 is opened to allow the oil in the oil pan 69 to be sucked into the oil chamber 212 via the oil passages 28 and 217. In this case, the check valve 227 is closed.

Then, when the piston 207 is moved closer to the axis B1 by the relative rotation of the inner race 205 and the outer race 241, the capacity of the oil chamber 212 is reduced so that the pressure in the oil chamber 212 is raised. Consequently, the check valve 218 is closed and the check valve 227 is opened so that the oil discharged from oil chamber 212 is returned to the oil pan 69 via the oil passages 203, 202 and 33. Thus, the oil is sucked into the radial piston pump 14 and discharged from the radial piston pump 14 alternately by the reciprocation of the piston 207 in the radial direction of the inner race 205.

According to the Embodiment 3, an oil suction amount and an oil discharging amount of the radial piston pump 14 can also be controlled by controlling opening angles of the suction amount control valve 70 and discharging amount control valve 71 on the same principle as that of the Embodiment 1. Also, the torque transmitted from the input shaft 2 to the outer race 214 can be controlled by controlling the oil amount and the oil pressure in the oil chamber 212 on the same principle as that of the Embodiment 1.

As explained above, in case the Drive position is selected, the outer race 214 and the impeller 335 are connected in the power transmittable manner. Therefore, the torque of the input shaft 2 is transmitted to the impeller 335 and the primary shaft 51 through the outer race 214 so that the primary shaft 51 is rotated in the forward direction. Here, in case the Drive position is selected, since the wall portion 345 is moved closer to the outer wall of the inner race 205, the communicating area between the oil passages 234 and 346 is narrowed, or the oil passages 234 and 346 are disconnected. For this reason, the oil discharged from the oil chamber 212 to the oil passage 234 is thereby prevented certainly from being fed to the impeller 335.

To the contrary, in case the shift position is shifted to Reverse position, the outer race 214 is moved in the axial direction to the right side in Fig. 5 together with the wall portion 345. As a result, the engagement portions 338 and 343 are released from each other, and the engagement portions 344 and 340 are engaged with each other. Consequently, the wall portion 345 is moved away from the inner race 205, and the communicating area between the oil passages 234 and 346 is enlarged. Additionally, the outer race 214 is held unrotatably by the center case 5. That is, a power transmission between the outer race 214 and the impeller 335 is thereby disconnected.

In case the engine torque is transmitted to the input shaft 2 when the oil passages 234 and 346 are thus connected, the oil discharged from the oil chamber 212 by the action of the piston 207 to the oil passage 234 is jetted onto the blades 335b of the impeller 335 from the oil passage 346 as shown in Fig. 6, and the primary shaft 51 and the impeller 335 is rotated in the backward direction by a kinetic energy of the jet blast. The oil collided against the impeller 335 is then returned to the suction port 219 via the oil passages 349, 351 and 352. Additionally, a portion of the convex portion 356 functions as a so-called "noncontact type labyrinth sealing" when it enters into the concave portion 355. For this reason, the oil in the oil passage 234 is prevented from flowing into the oil passage 351 through the clearance between the inner race 205 and the wall portion 345. This means that the oil in the oil passage 234 can be jetted onto the impeller 335 certainly. Adversely, the oil passed though the oil passage 349 is prevented from flowing back to the oil passage 234 side by the convex portion 356 and the concave portion 355. Therefore, the oil collided against the impeller 355 is then returned to the suction port 219 certainly. Here, since the oil passage 203 is opened also in case the Reverse position is selected, a portion of the oil discharged from the radial piston pump 14 is discharged to the oil passage 33 through the oil passage 203, however, the discharging amount control valve 71 is closed in this case. For this reason, a drop in the amount of the oil flowing into the oil passage 346 can be avoided.

To the contrary, in case Neutral position or Parking position is selected, the outer race 16 is halted at a position where the engagement portions 338 and 343 are released from each other, and the engagement portions 340 and 344 are engaged with each other. Consequently, the inner race 205 and the outer race 214 are rotated integrally when the engine torque is transmitted to the inner race 205, and the piston 207 will not be actuated in the radial direction. Therefore, the suction and discharge of the oil by the radial piston pump 14 are halted so that the oil will not be jetted to the impeller 335. Also, a power transmission between the outer race 214 and the impeller 335 is disconnected. Thus, in case the Neutral position or the Parking position is selected, a power transmission between the input shaft 2 and the primary shaft 51 is disconnected. Moreover, according to the Embodiment 3, the compression coil spring 223 of the check valve 218 is designed to have its diameter larger in the wall 225 side than that in the valve element 221 side. Therefore, the compression coil spring 223 can be positioned in the radial direction by contacting an outer circumferential face of the compression coil spring 223 to an inner wall of the valve element housing chamber 224. For this reason, the power to push the valve element 221 onto the valve seat 220 can be stabilized, and no other positioning mechanism is required to be provided. In addition, since the compression coil spring 223 is a conical coiled spring, winding clearances can be maintained widely. Therefore, a drop in an amount of the oil to be sucked into the oil chamber 212 thorough the check valve 218 can be prevented.

Also, according to the Embodiment 3, the compression coil spring 231 of the check valve 227 is designed to have its diameter larger in the wall 233 side than that in the valve element 230 side. Therefore, the compression coil spring 231 can be positioned in the radial direction by contacting an outer circumferential face of the compression coil spring 231 to the inner wall of the valve element housing chamber 232. For this reason, the power to push the valve element 230 onto the valve seat 229 can be stabilized, and no other positioning mechanism is required to be provided. In addition, since the compression coil spring 231 is a conical coiled spring, winding clearances can be maintained widely. Therefore, a drop in an amount of the oil flowing through the check valve 227 can be prevented. Here, the remaining elements in the Embodiment 3 can achieve the same advantages as those achieved by the corresponding elements in the Embodiment 1.

Here will be explained corresponding relations between the Embodiment 3 and the present invention. The radial piston pump 14 in the embodiment comprising the inner race 205, the outer race 214, the piston 207, the check valves 218 and 227, the compression coil spring 213, the cam face 350, the rolling member 209 and so on corresponds to "the positive displacement pump" of the invention. The inner race 205 in the embodiment corresponds to "the input member" of the invention. The primary shaft 51, the impeller 335 and the joining member 337 in the embodiment correspond to "the output member" of the invention. "The rotational direction switching mechanism" of the invention comprises the inner race 205, the piston 207, the rolling member 209, the outer race 214, the cam face 350, the oil passages 234, 346, 349, 351, 352, 202, 203 and 353, the convex portion 356, the concave portion 355, the wall portion 345, the outer wall of the inner race 205, the engagement portions 338, 343, 340 and 344 and so on.

Also, in the Embodiment 3, the oil passages 28 and 353, and the check valve 218 where the oil to be sucked into the radial piston pump 14 flows through in case the primary shaft 51 is rotated in the forward direction; and the oil passages 203, 202 and 33, and the check valve 227 where the oil discharged from the radial piston pump 14 flows through in case the primary shaft 51 is rotated in the forward direction; correspond to "the first flow route of the fluid" of the invention. Meanwhile, in the Embodiment 3, the oil passages 28, 353, 349, 351 and 352, and the check valve 218 where the oil to be sucked into the radial piston pump 14 flows through in case the primary shaft 51 is rotated in the backward direction; and the oil passages 234 and 346, and the check valve 227 where the oil discharged from the radial piston pump 14 flows through in case the primary shaft 51 is rotated in the backward direction; correspond to "the second flow route of the fluid" of the invention. The wall face 348 of the wall portion 345 and the outer wall of the inner race 205 in the embodiment correspond to "the mechanism for switching the flow route of the fluid between the first flow route and the second flow route (i.e., the route switching device or the direction control valve)", and "the mechanism for suppressing an increase in a kinetic energy to rotate the output member backwardly" of the invention. The oil passages 234 and 346 in the embodiment correspond to "the mechanism for driving the output member by jetting the fluid to the output member". The outer race 214 in the embodiment corresponds to "the connection member" of the invention, and the engagement portions 338 and 343 correspond to "the mechanism allowing the output member to rotate in the forward direction in case the connection member is connected with the output member in a power transmittable manner".

Moreover, "the connection member and the input member are connected in a power transmittable manner" by the piston 207, the rolling member 209, the cam face 350 and so on. Meanwhile, the case in which the engagement portions 338 and 343 are released in the embodiment corresponds to "the case in which the connection member disables the power transmission to the output member" of the invention. Also, the case in which the oil passages 234 and 346 are connected so that the oil is jetted from the oil passage 346 in the embodiment corresponds to the case of the invention in which "the fluid discharged from the positive displacement pump is jetted to the output member". The check valve 218 in the embodiment comprising the suction port 219 corresponds to "the suction side of the positive displacement pump" of the invention, and the check valve 227 comprising the discharging port 228 corresponds to "the discharging side of the positive displacement pump" of the invention. Further, the oil passages 349, 350 and 352 in the embodiment correspond to "the guidepath" of the invention, and the convex portion 356 and the concave portion 355 correspond to "the backflow preventing mechanism" of the invention. The corresponding relations between the remaining elements in the Embodiment 3 and the invention are identical to those between the Embodiment 1 and the invention.

Here, the Embodiments 1 to 3 can also be applied to a continuously variable transmission other than the belt-type continuously variable transmission 72. For example, the Embodiments 1 to 3 can be applied to a power transmission system comprising a toroidal type continuously variable transmission. Moreover, those embodiments can also be applied to a power transmission system comprising a geared transmission of a vehicle having a plurality of planetary gear mechanisms and a frictional engagement devises such as a clutch and a brake. In case of applying the invention to this kind of geared transmission, the output member can also be positioned in the axial direction by striking the jet blast of the oil to the impeller. With this construction, a chattering noise of the output member can be suppressed even when a thrust force is applied to the output member by an external force. That is, a performance to suppress a vibration and a noise can be improved.

Besides, according to the Embodiment 1, the oil collided against the impeller 54 is returned to the suction port 30 via the oil passages 59, 102, 100 and 101, however, a radial piston pump 14 which is not equipped with the oil passages 59, 102, 100 and 101 can also be used. Meanwhile, according to the Embodiment 3, the oil collided against the impeller 335 is returned to the suction port 219 via the oil passages 349, 350 and 352, however, a radial piston pump 14 which is not equipped with the oil passages 349, 350 and 352 can also be used.

Additionally, in each embodiment, the configuration of the blades of the impeller should not be limited to a flat plate as illustrated in Fig. 1, 3 and 6. That is, curved blades may also be mounted on the plate so as to create a flow path along a curved face of the blade. In case the oil is jetted from the oil passage 64 as illustrated in Fig. 1, 3 and 4, the oil is flown from outside to inside of the impeller. Specifically, a radially outward part of the impeller is an inlet of the flow path, and a radially inward part of the impeller is an outlet of the flow path. In this case, a form of the flow path is curved into arcuate or parabolic. In case the flow path is thus curved, a component force acts on an inner face of the curved blade according to the kinetic energy of the oil jetted from the oil passage 64 and flowing along the inner face of the blade. As a result, a force to rotate the impeller 54 is created.

Here, provided that "$\rho QV$" is allotted to represent a kinetic momentum of the oil at the inlet of the flow path, and "$\rho QV'$" is allotted to represent a kinetic momentum of the oil at the outlet of the flow path, the following momentum equation is satisfied:

$$F = \rho \, Q(V' - V) \tag{1}$$

In the above equation, "F" represents a force in the direction to rotate the impeller 54, "$\rho$" represents a density of the oil, "Q" represents a flow rate of the oil, and "V" and "V'" represent a flow velocity of the oil. That is, the component force acts on an inner face of the curved blade according to a degree of a temporal change in the kinetic momentum of the oil, in other words, according to a "difference" between the kinetic momentums of the oil. Additionally, if the form of the flow path from the inlet to outlet is curved into arcuate or parabolic in the plate orthogonal to the axis B1, a change in a sectional shape of the oil flowing through the flow path can be minimized in case the oil flows along the inner face of the blade. That is, deterioration in power transmission efficiency between the oil and the impeller 54 can be prevented.

On the other hand, in case of forming a flow path along the blade in the configuration in which the oil jetted from the oil passage 346 is flown radially from inside to outside of the impeller as illustrated in Figs. 5 and 6, a radially inward part of the impeller is an inlet of the flow path, and a radially outward part of the impeller is an outlet of the flow path. The force to rotate the impeller 335 is created also in case that the arcuare or parabolic flow paths are formed along the blades in the configuration shown in Figs. 5 and 6, on the principle explained with reference to the above equation (1). Here, in the embodiments, although the impeller and the transmission are arranged between the engine and the radial piston pump in the axial direction of the input shaft, a configuration in which the radial piston pump and the impeller are arranged between the engine and the transmission in the axial direction of the input shaft is included in the present invention. In addition, according to the present invention, a definition of the expression "jetting the fluid to the output member" includes striking the oil to the output member, flowing the oil along the output member and so on.

The embodiments thus far explained may also be applied to a power transmission system of a vehicle in which a motor generator is used as a prime mover transmitting a power thereof to the input shaft 2. Moreover, in addition to the power transmission system in which the input shaft 2 is arranged in a width direction of the vehicle, the embodiments may also be applied to a power transmission system in which an input shaft is arranged in an anteroposterior direction of a vehicle. Still moreover, the power transmission system according to the embodiments can be applied to any of a front-wheel-drive vehicle, a rear-wheel-drive vehicle and a four-wheel-drive vehicle. Furthermore, according to the present invention, the input member and the output member include rotary elements such as a shaft, an annular rotary member, and gears. That is, the only requirement for the input member and the output member is capable of transmitting a power, and a material and a configuration thereof should not be limited.

Lastly, according to the embodiments thus far described, the outer race and the impeller are connected with each other in a power transmittable manner in case the Drive position is selected, and the power transmission between the outer race and the impeller is disconnected in case the Reverse position is selected. However, the present invention may also be applied to a power transmission system, in which the outer race and the impeller are connected with each other in a power transmittable manner in case the Reverse position is selected, and in which the power transmission between the outer race and the impeller is disconnected in case the Drive position is selected. Additionally, although the engaging type clutch is employed as the connection member in the above-explained embodiments, the outer race and the impeller can also be connected with each other by a frictional type clutch or an electromagnetic clutch. Also, a vane pump, a gear pump or the like can be used as the positive displacement pump. In case of driving the output member by a kinetic energy of the oil discharged from those pumps, a transmission mechanism for transmitting a power from the prime mover to the output member has to be provided other than utilizing the kinetic energy of the fluid. In this case, a geared transmission, a frictional transmission and so on can be used as the transmission mechanism.

**Claims**

1. A power transmission system having a positive displacement pump which is driven by a prime mover, and an output member which is driven by a fluid discharged from the positive displacement pump, **characterized by** comprising:

   a rotational direction switching mechanism for switching a rotational direction of the output member between forward direction and backward direction.

2. The power transmission system as claimed in claim 1, **characterized in that**:

   the rotational direction switching mechanism comprises a mechanism for switching a route of feeding a fluid discharged from the positive displacement pump between a first flow route which is to be selected in case of rotating the output member in the forward direction, and a second flow route which is to be selected in case of rotating the output member in the backward direction.

3. The power transmission system as claimed in claim 1 or 2, **characterized in that**:

   the rotational direction switching mechanism comprises a mechanism for driving the output member by jetting the fluid toward the output member.

4. The power transmission system as claimed in claim 3, **characterized in that**:

   the rotational direction switching mechanism comprises a mechanism for suppressing an increase in a kinetic energy to rotate the output member backwardly, by reducing a feeding amount of the fluid fed to the output member from the positive displacement pump to rotate the output member backwardly, in case the route of rotating the output member in the forward direction is selected.

5. The power transmission system as claimed in any of claims 1 to 4, **characterized in that** the positive displacement pump comprises:

   an input member to which power of the prime mover is transmitted,
   a connection member, which is connected with the input member in a power transmittable manner, and which is capable of enabling and disabling a power transmission to the output member selectively; and
   a mechanism allowing the output member to rotate in the forward direction in case the connection member is connected with the output member in a power transmittable manner.

6. The power transmission system as claimed in Claim 5, **characterized in that**:

   the rotational direction switching mechanism further comprises a mechanism interrupting a transmission of a power to rotate the output member in the forward direction from the input member, by selecting the flow route of rotating the output member in the backward direction by the fluid discharged from the positive displacement pump to disable the connection member to transmit the power to the output member.

7. The power transmission system as claimed in Claim 3 or 4, **characterized in that**:

   the positive displacement pump comprises an input member to which power of the prime mover is transmitted, and a connection member capable of enabling and disabling a power transmission to the output member selectively, and
   the rotational direction switching mechanism further comprises a mechanism allowing the fluid discharged from the positive displacement pump to be jetted toward the output member, by selecting the flow route of rotating the output member in the backward direction by the fluid discharged from the positive displacement pump, while interrupting the transmission of the power to rotate the output member in the forward direction from the input member driven by the prime mover, by disabling the connection member to transmit the power to the output member.

8. The power transmission system as claimed in any of claims 1 to 7, **characterized by** further comprising:

a guidepath for guiding the fluid to a suction side of the positive displacement pump after the fluid drives the output member, and
a backflow preventing mechanism for preventing the fluid in the guidepath from returning to a discharging side of the positive displacement pump.

9. The power transmission system as claimed in claim 8, **characterized in that**:

the discharging portion of the positive displacement pump is situated closer to a rotation axis of the input member than the input member;
the guidepath is formed by a side face of the input member; and
the backflow preventing mechanism is formed by tapering the side face of the input member toward an outer end of the input member so as to enlarge a flow area of the guidepath.

10. The power transmission system as claimed in claim 1, **characterized in that**:

the rotational direction switching mechanism includes a mechanism for switching a direction of a torque applied to the output member through the fluid between forward direction and backward direction.

11. The power transmission system as claimed in claim 1, **characterized in that**:

the positive displacement pump comprises a first member rotated by a power from the prime mover, and a second member for changing an inner volume of a hydraulic chamber by rotating relatively to the first member; and
the rotational direction switching mechanism comprises a mechanism for restricting a suction of the fluid into the hydraulic chamber or a discharge of the fluid from the hydraulic chamber while engaging the second member with the output member to rotate those members integrally, and
a turbine mechanism for generating a torque to rotate the output member in a direction opposite to the first member, by receiving the fluid discharged from the positive displacement pump while insulating the second member from the output member and fixing the second member.

12. The power transmission system as claimed in claim 11, **characterized in that**:

the turbine mechanism comprises an impeller, which is integrated with the output member, and which generates a torque to rotate the output member in a direction opposite to the first member by receiving the fluid discharged from the positive displacement pump.

13. The power transmission system as claimed in claim 11 or 12, **characterized by** further comprising:

a first flow route leading the fluid discharged from the positive displacement pump to a reservoir;
a flow rate control means arranged on the first flow route;
a second flow route leading the fluid discharged from the positive displacement pump to the turbine mechanism; and
wherein the rotational direction switching mechanism includes a mechanism relatively enlarging an opening area of the first flow route and relatively narrowing an opening area of the second flow route in case of moving the second member to integrate the second member with the output member, and relatively narrowing the opening area of the first flow route and relatively enlarging the opening area of the second flow route in case of moving the second member away from the output member.

14. The power transmission system as claimed in claim 10, **characterized:**

**by** further comprising an input shaft which is rotated by the prime mover;
in that the positive displacement pump comprises: a cylinder member, which is mounted on an outer circumference of the input shaft to rotate integrally with the input shaft, and which is opened outwardly in the radial direction; a piston, which is housed in the cylinder member reciprocatably in the radial direction of the input shaft, and which forms a hydraulic chamber with the cylinder member; a cylindrical member enclosing an outer circumference of the cylinder member; a cam face, which is formed on an inner circumference of the cylindrical member, and a surface profile thereof in the circumferential direction is a continuous wave pattern; a rolling member, which is interposed between the cam face and the piston and held by the piston; an elastic member pushing the piston in a direction to contact the rolling member with the cam face; a suction check valve which is opened in case an inner volume of the hydraulic chamber is enlarged; and a discharging check valve is opened in case the inner volume of the hydraulic chamber is reduced; and

by further comprising an engagement mechanism for engaging the cylindrical member selectively with a member integral with the output member and with a predetermined fixing portion.

**15.** The power transmission system as claimed in claim 14, **characterized by** further comprising:

an impeller integral with the output member; and

a mechanism for jetting the fluid discharged from the positive displacement pump when the cylindrical member is being engaged with the predetermined fixing portion, toward the impeller to rotate the output member in a direction opposite to the input shaft.

FIG.1

EP 1 852 626 A1

FIG.2

EP 1 852 626 A1

FIG.3

FIG.4

FIG.5

EP 1 852 626 A1

FIG.6

| **INTERNATIONAL SEARCH REPORT** | International application No. |
| --- | --- |
| | PCT/JP2006/302930 |

A. CLASSIFICATION OF SUBJECT MATTER
*F16D31/02*(2006.01), *F16D33/00*(2006.01), *F16D39/00*(2006.01)

According to International Patent Classification (IPC) or to both national classification and IPC

B. FIELDS SEARCHED

Minimum documentation searched (classification system followed by classification symbols)
F16D31/02, F16D33/00, F16D39/00, F16H45/00

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2002-187442 A (Yanmar Agricultural Equipment Co., Ltd.), 02 July, 2002 (02.07.02), (Family: none) | 1,10 |
| X | JP 11-108152 A (Honda Motor Co., Ltd.), 20 April, 1999 (20.04.99), (Family: none) | 1,2,10 |
| Y | JP 1-20312 B2 (Daiji MITSUHIRO), 14 April, 1989 (14.04.89), (Family: none) | 1-4,8,10 |
| Y | JP 61-258971 A (Daiji MITSUHIRO), 17 November, 1986 (17.11.86), (Family: none) | 1-4,8,10 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 May, 2006 (10.05.06) | 23 May, 2006 (23.05.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/302930

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 9-264340 A  (Toyota Motor Corp.),<br>07 October, 1997 (07.10.97),<br>& US 5860501 A          & EP 798479 A2 | 8 |
| A | JP 8-109955 A  (Kiichi TAGA),<br>30 April, 1996 (30.04.96),<br>(Family: none) | 1-15 |
| A | JP 8-284977 A  (Honda Motor Co., Ltd.),<br>01 November, 1996 (01.11.96),<br>(Family: none) | 1-15 |
| A | DE 3410525 A1  (LUTZ DIETER DR ING),<br>03 October, 1985 (03.10.85),<br>(Family: none) | 1-15 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8109955 A

- JP 8284977 A